(19) Europäisches Patentamt
European Patent Office
Office européen des brevets

(11) **EP 3 637 359 A1**

(12) **EUROPEAN PATENT APPLICATION**
published in accordance with Art. 153(4) EPC

(43) Date of publication:
**15.04.2020 Bulletin 2020/16**

(51) Int Cl.:
***G06Q 50/26*** (2012.01)

(21) Application number: **17912986.1**

(22) Date of filing: **08.06.2017**

(86) International application number:
**PCT/JP2017/021386**

(87) International publication number:
**WO 2018/225227 (13.12.2018 Gazette 2018/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Fujitsu Limited**
**Kawasaki-shi, Kanagawa 211-8588 (JP)**

(72) Inventors:
• **NAKAZAWA, Katsuhito**
**Kawasaki-shi**
**Kanagawa 211-8588 (JP)**

• **SHIOTA, Tetsuyoshi**
**Kawasaki-shi**
**Kanagawa 211-8588 (JP)**
• **HOSHINO, Takahiro**
**Tokyo 108-8345 (JP)**
• **SAITO, Yuki**
**Tokyo 108-8345 (JP)**
• **TODA, Takayuki**
**Tokyo 108-8345 (JP)**
• **MATSUMURA, Yuya**
**Tokyo 108-8345 (JP)**

(74) Representative: **Haseltine Lake Kempner LLP**
**Lincoln House, 5th Floor**
**300 High Holborn**
**London WC1V 7JH (GB)**

(54) **INFORMATION PROCESSING METHOD, INFORMATION PROCESSING DEVICE, AND INFORMATION PROCESSING COMPUTER PROGRAM**

(57) A method includes calculating, for each reference target among a plurality of reference targets to which a measure has been applied, a difference between a value of an index of the reference target linked to predetermined variables that change over time and that are influenced by the measure, and a value of the index of the reference target obtained under a virtual scenario in which the measure is not applied, as a first index value difference occurring when the measure is applied to the reference target, calculating a relation expression that links the first index value difference to the predetermined variables based on the first index value difference and the predetermined variables of each reference target among the reference targets, and calculating, by using the predetermined variables of a target and the relation expression, a difference between a value of the index of the target obtained under a virtual scenario in which the measure is applied to the target and a value of the index of the target obtained when the measure is not applied to the target, as a second index value difference.

FIG.5

START

↓ S501
SELECT A PLURALITY OF FIRST SIMILAR LOCAL GOVERNMENTS SIMILAR TO CITY A, WHERE MEASURE IS NOT INTRODUCED

↓ S503
SELECT A PLURALITY OF SECOND SIMILAR LOCAL GOVERNMENTS SIMILAR TO CITY A, WHERE MEASURE HAS BEEN INTRODUCED

↓ S505
CALCULATE ESTIMATED NUMBER OF MANUFACTURING WORKERS BY USING A VIRTUAL SCENARIO IN WHICH MEASURE IS NOT INTRODUCED FOR EACH SECOND SIMILAR LOCAL GOVERNMENT AMONG SECOND SIMILAR LOCAL GOVERNMENTS

↓ S507
CALCULATE DIFFERENCE OF THE ESTIMATED NUMBER OF MANUFACTURING WORKERS BETWEEN SECOND SIMILAR LOCAL GOVERNMENT WHERE MEASURE IS INTRODUCED AND SECOND SIMILAR LOCAL GOVERNMENT WHERE MEASURE IS NOT INTRODUCED FOR EACH SECOND SIMILAR GOVERNMENT AMONG SECOND SIMILAR GOVERNMENTS, AND CALCULATE VARIATION IN THE NUMBER OF MANUFACTURING WORKERS CAUSED BY INTRODUCING MEASURE FOR EACH SECOND SIMILAR GOVERNMENT AMONG SECOND SIMILAR GOVERNMENTS

↓ S509
CALCULATE RELATIONAL EXPRESSION BETWEEN VARIATION IN THE NUMBER OF MANUFACTURING WORKERS CAUSED BY INTRODUCING MEASURE IN EACH SECOND SIMILAR LOCAL GOVERNMENT OF SECOND SIMILAR LOCAL GOVERNMENTS AND EXPLANATORY VARIABLES

↓ S511
CALCULATE VARIATION IN THE NUMBER OF MANUFACTURING WORKERS OBTAINED UNDER A VIRTUAL SCENARIO IN WHICH MEASURE IS INTRODUCED IN CITY A, AND CALCULATE SUM OF VARIATION IN THE NUMBER OF MANUFACTURING WORKERS AND THE NUMBER OF MANUFACTURING WORKERS WHEN MEASURE IS NOT INTRODUCED IN CITY A

↓
END

EP 3 637 359 A1

## Description

## Technical Field

The present invention relates to an information processing method, an information processing apparatus, and an information processing computer program, to calculate a variation in a value of an index when a measure is applied to a target.

## Background Art

A local government may need to consider introducing a new measure in order to revitalize their communities (e.g., Patent Document 1 and Patent Document 2). Introducing a new measure requires a substantial amount of budget and time, and it is preferable to consider an effect on a local government caused by an introduction of a new measure in advance of the introduction.

In respect to a value of an index reflecting an influence of a measure, a local government attempts to compare a value of the index when a new measure is introduced and a value of the index when a new measure is not introduced in order to estimate an effect of new measure introduction.

Technology using counterfactual thinking is proposed as a method to estimate an effect caused by a new measure introduction in local government, for example.

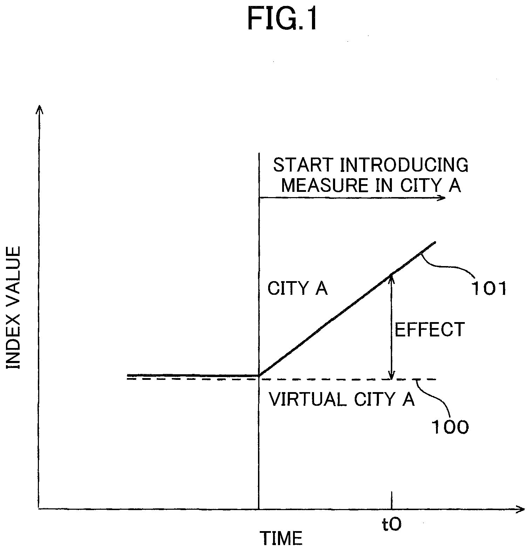

Fig. 1 is a drawing illustrating a counterfactual thinking method of related art.

In the technology using counterfactual thinking, City A that has introduced a new measure is selected, and a plurality of local governments that are similar to City A in a population, an industrial structure, or the like, and do not introduce the measure, are selected. A virtual model of City A is created as a model of City A before the measure is introduced based on values of an index of the similar local governments that have introduced the measure and explanatory variables whose objective variables are a value of the index. A value of the index is a value that reflects an influence of the measure and can be an index of an effect of the measure. A value of the index is the number of manufacturing workers, for example. The virtual model of City A is created by a publicly known technology such as a propensity score method, a matching method, or a difference in differences method, for example. A curve 100 indicating a value of the index of City A before the measure is introduced is obtained by using the virtual model of City A.

A difference between a curve 101 indicating an actual value of the index after the measure is introduced in City A and the curve 100 indicating a value of the index of the virtual model of City A when the measure is not introduced, is quantitatively obtained as an effect caused by introducing the measure in City A at time t0.

## Related-Art Documents

## Patent Document

[Patent Document]

[Patent Document 1] Japanese Laid-Open Patent Publication No. 2007-41705
[Patent Document 2] Japanese Laid-Open Patent Publication No. 2015-132863

## Summary of the Invention

## Problem to be Solved by the Invention

According to the counterfactual thinking described above, for a local government in which a measure has been already introduced, a value of an index when a measure is not introduced in the local government can be estimated.

It is expected to obtain a future value of an index by using a virtual scenario in which a measure is introduced in a local government where a measure is not introduced, and calculate an effect caused by introducing a measure in the local government.

However, a technology to meet the expectation is not proposed yet.

An object of the present invention is to provide an information processing method that calculates an effect of applying a measure to a target by obtaining a value of an index under a virtual scenario in which a measure is applied to the target to which a measure is not applied.

**Means to Solve the Problem**

According to an aspect of the embodiment, an information processing method includes calculating, for each reference target among a plurality of reference targets to which a measure has been applied, a difference between a value of an index of a reference target being said each reference target linked to predetermined variables that change over time and that are influenced by the measure, and a value of the index of the reference target obtained under a virtual scenario in which the measure is not applied to the reference target, as a first index value difference occurring when the measure is applied to the reference target, calculating a relation expression that links the first index value difference to the predetermined variables based on the first index value difference and the predetermined variables of each reference target among the reference targets, and calculating, by using the predetermined variables of a target and the relation expression, a difference between a value of the index of the target obtained under a virtual scenario in which the measure is applied to the target and a value of the index of the target obtained when the measure is not applied to the target, as a second index value difference.

Additionally, according to an aspect of the embodiment, an information processing apparatus includes a processing unit including a first index value difference calculation unit configured to calculate, for each reference target among a plurality of reference targets to which a measure has been applied, a difference between a value of an index of a reference target being said each reference target linked to predetermined variables that change over time and that are influenced by the measure, and a value of the index of the reference target obtained under a virtual scenario in which the measure is not applied to the reference target, as a first index value difference occurring when the measure is applied to the reference target, a relation calculation unit configured to calculate a relation expression that links the first index value difference to the predetermined variables based on the first index value difference and the predetermined variables of each reference target among the reference targets, and, a second index value difference calculation unit configured to calculating, by using the predetermined variables of a target and the relation expression, a difference between a value of the index of the target obtained under a virtual scenario in which the measure is applied to the target and a value of the index of the target obtained when the measure is not applied to the target, as a second index value difference.

Furthermore, according to an aspect of the embodiment, an information processing computer program causes a processor to execute a method including calculating, for each reference target among a plurality of reference targets to which a measure has been applied, a difference between a value of an index of a reference target being said each reference target linked to predetermined variables that change over time and that are influenced by the measure, and a value of the index of the reference target obtained under a virtual scenario in which the measure is not applied to the reference target, as a first index value difference occurring when the measure is applied to the reference target, calculating a relation expression that links the first index value difference to the predetermined variables based on the first index value difference and the predetermined variables of each reference target among the reference targets, and calculating, by using the predetermined variables of a target and the relation expression, a difference between a value of the index of the target obtained under a virtual scenario in which the measure is applied to the target and a value of the index of the target obtained when the measure is not applied to the target, as a second index value difference.

**Advantage of the Invention**

In one aspect, it is possible to determine effectiveness of a measure applied to a target by obtaining a difference between a value of an index obtained under a virtual scenario in which a measure is applied to the target to which a measure is not applied and a value of an index obtained when a measure is not applied to the target.

**Brief Description of the Drawings**

Fig. 1 is a drawing illustrating a counterfactual thinking method of related art;
Fig. 2 is a drawing illustrating an example of an embodiment of an information processing apparatus disclosed herein;
Fig. 3(A) is a drawing illustrating a processor and Fig. 3(B) is a drawing illustrating a memory;
Fig. 4 is a drawing illustrating an effect obtained by an information processing apparatus disclosed herein under a virtual scenario in which a measure is introduced in a local government;
Fig. 5 is a drawing illustrating a flow chart describing operations of an information processing apparatus disclosed herein;
Fig. 6 is a drawing illustrating a table indicating transition of the actual number of manufacturing workers in respective second similar local governments where a measure is introduced;
Fig. 7 is a drawing illustrating transition of estimated numbers of manufacturing workers in respective second similar local governments under a virtual scenario in which a measure is not introduced;

Fig. 8 is a drawing illustrating a table indicating variations in the numbers of manufacturing workers in respective second similar local governments caused by introducing a measure;

Fig. 9 is a drawing illustrating a table of parameters of a linear model indicating a relationship between a variation in the number of manufacturing workers and an explanatory variable; and

Fig. 10 is a drawing illustrating variations in the numbers of manufacturing workers in City A under a virtual scenario in which a measure is introduced in City A.

**Mode for Carrying Out the Invention**

In the following, a preferred embodiment of an information processing apparatus disclosed here will be described with reference to the accompanying drawings. However, the technical scope of the present invention is not limited to these embodiments, and is intended to cover the invention described in the claims and equivalents.

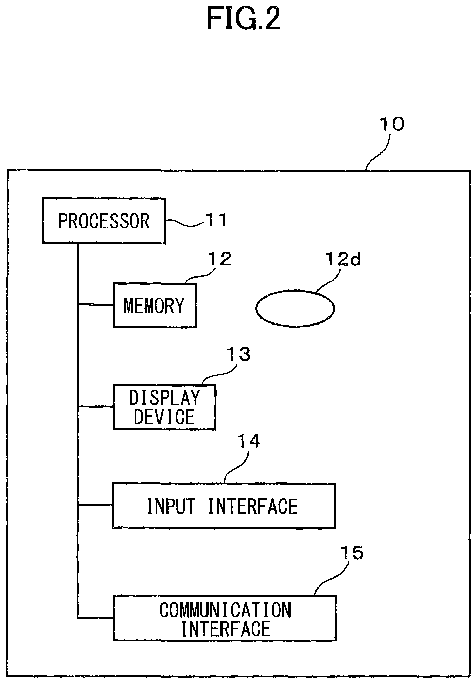

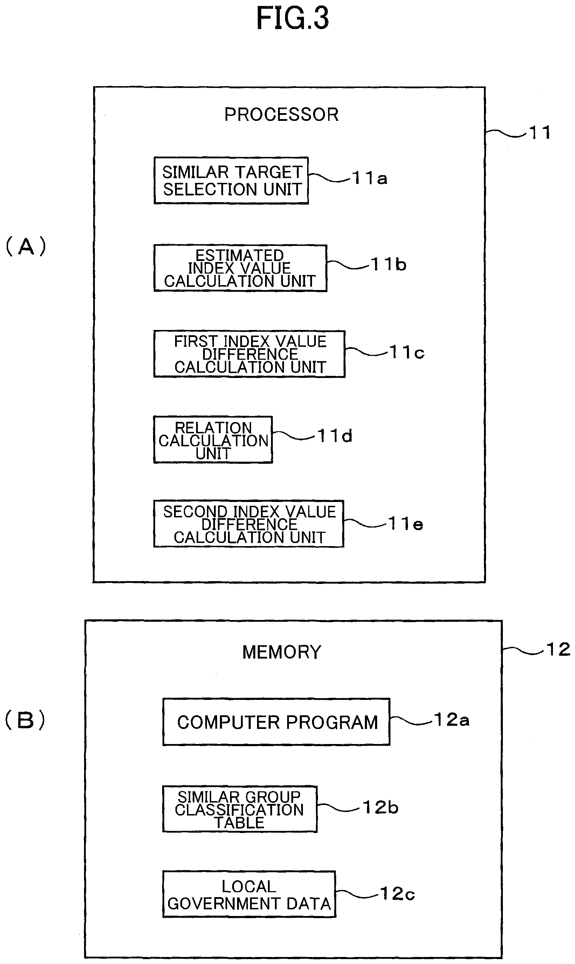

Fig. 2 is a drawing illustrating an example of an embodiment of an information processing apparatus disclosed herein. Fig. 3(A) is a drawing illustrating a processor and Fig. 3(B) is a drawing illustrating a memory.

The information processing apparatus (which will hereinafter be referred to as the apparatus) 10 of this embodiment obtains a value of an index by using a virtual scenario in which a measure is applied to a target such as a local government to which the measure is not applied, and calculates an effect of applying the measure to the target. As described above, a value of the index reflects an influence of the measure, and is a value that can be an index of the effect of the measure.

A measure applied to a local government may include a measure to construct an industrial park in a local government in order to invite companies to a local government.

A target to which a measure is applied is not limited to a local government. For example, the target may include a patient treated in a medical institution and a company.

In the following of this specification, the apparatus 10 will be described by an example of a local government as a target to which a measure is applied.

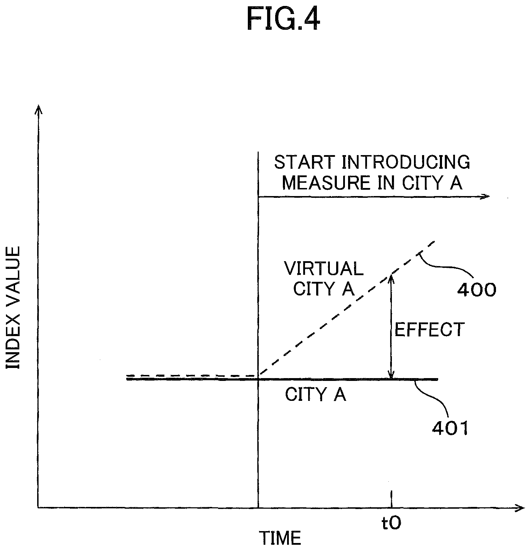

Fig. 4 is a drawing illustrating an effect obtained by the information processing apparatus disclosed herein under a virtual scenario in which a measure is introduced in a local government. In this specification, introducing a measure in a local government (i.e. a target) has the same meaning as applying a measure to a local government (i.e., a target).

With respect to a local government City A that is input by a user as a target, the apparatus 10 calculates a value of an index of virtual City A under a virtual scenario in which a measure is introduced. The apparatus 10 calculates a difference between a curve 400 indicating a value of an index of virtual City A under a virtual scenario in which a measure is introduced and a curve 401 indicating a value of an index of City A where the measure is not introduced, as an effect at time t0 of applying the measure to City A.

As illustrated in Fig. 2, the apparatus 10 includes a processor 11, a memory 12, a display device 13, an input interface 14, and a communication interface 15. The processor 11 is an example of a processing unit or a processing apparatus. The memory 12 is an example of a storage unit or a storage apparatus.

Details of hardware components of the apparatus 10 will be described in the following.

The processor 11 includes one or more central arithmetic circuits and peripheral circuits such as a register, a cache memory, and an interface. The processor 11 controls hardware components of the apparatus 10 and performs various processes based on a predetermined program 12a stored in the memory 12 in advance, and uses the memory 12 to store data generated by processing temporarily.

The memory 12 may include a semiconductor memory such as a random access memory (RAM) and a read only memory (ROM), or a non-volatile memory such as a magnetic disk and a flash memory. The memory 12 may include a program stored in a non-temporary recording medium 12d, in a readable drive (which is not illustrated).

As illustrated in Fig. 3(B), the memory 12 stores a similar group classification table 12b in which the degree of the similarity among local governments is classified and registered based on information such as a population and an industrial structure in each local government, in addition to the predetermined program 12a. The memory 12 stores local government data 12c in which a population, the number of welfare facilities for the elderly, product shipment value, the number of deaths, the number of elementary school students, and the like are registered for each local government per year. The similar group classification table 12b may be stored in an external server, which is not illustrated, and the apparatus 10 may refer to the similar group classification table 12b by communicating with the server through a network, which is not illustrated.

The display device 13 is controlled by the processor 11 and various information associated with operations of the apparatus 10 can be displayed on a screen. A liquid crystal display can be used as the display device 13, for example.

The input interface 14 is operated by a user of the apparatus 10 and operations can be input. The input interface 14 can use a keyboard or mouse as the input interface 14.

The communication interface 15 sends and receives information through a network, which is not illustrated, for

EP 3 637 359 A1

example. The communication interface 15 includes a communication circuit and a communication line for sending and receiving. The apparatus 10 may send and receive a program or information included in the similar group classification table 12 or the local government data 12cb by using the communication interface 16.

As illustrated in Fig. 3(A), the processor 11, which is described above, includes a similar target selection unit 11a, an estimated index value calculation unit 11b, a first index value difference calculation unit 11c, a relation calculation unit 11d, and a second index value difference calculation unit 11e.

These units included in the processor 11 are functional modules implemented by a computer program that is performed on the processor 11, for example. The units included in the processor 11 may be equipped in the apparatus 10 as separate circuits. The operation of each unit will be described later.

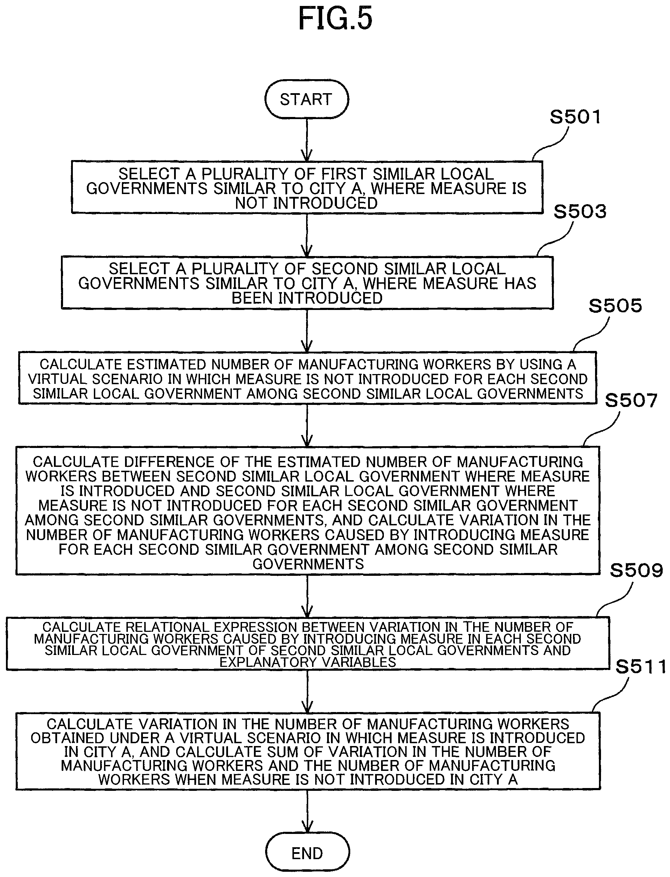

The operation of the apparatus 10 described above, will be described in the following with reference to a flowchart illustrated in Fig. 5. In this embodiment, the apparatus 10 calculates a variation (i.e., an index value difference) of the number of industrial workers (i.e., a value of an index) as an effect of introducing a measure when a measure to construct an industrial park is introduced in a local government City A given by a user (i.e., a target).

In step S501, the similar target selection unit 11a of the processor 11 selects a plurality of first similar local governments that are local governments similar to City A, in which the measure is not introduced. For each first similar local government, a direction in which the number of the industrial workers increases or decreases, when explanatory variables whose target variable is the number of industrial workers in the first similar local government change, is the same as a direction in which the number of the industrial workers increases or decreases, when explanatory variables of the number of industrial workers in City A change. The explanatory variables are affected and changed over time by applying the measure to the first similar local governments. A value of the index of the number of the manufacturing workers or the like is related to the explanatory variables and a value of the index may have a predetermined relationship with the explanatory variable.

Based on similar group classification which is government statistical data, local governments similar to City A are selected from local governments that are classified into the same classification name. The similar target selection unit 11a selects local governments in which the measure to construct an industrial park is not introduced, from the local governments classified into the same classification as City A, by referring to the similar group classification table 12b and a table in which the relationship between each local government and the introduction of the measure is recorded, stored in the memory 12. The similar target selection unit 11a selects all of the selected local governments or a predetermined number of the selected local governments as the plurality of the first similar local governments. When the similar target selection unit 11a selects a predetermined number of local governments, for example, the similar target selection unit 11a may select local governments whose population is within a predetermined range based on the population of City A. Alternatively, when the similar target selection unit 11a selects a predetermined number of local governments, the similar target selection unit 11a may select local governments whose percentages of a primary industry, a secondary industry, and a tertiary industry are within a predetermined range based on the percentages of City A.

The number of the first similar local governments in which the measure is not introduced may be appropriately determined in accordance with accuracy required for the number of estimated manufacturing workers calculated in the next step. It is considered that the more similar in a population and an industrial structure the local governments are selected based on the similar group classification, the more accurate the estimated number of industrial workers is. In contrast, the more similar in a population and an industrial structure the local governments are selected, the less local governments are selected, and accuracy of the estimated number of industrial workers calculated by regression analysis or the like tends to be decreased.

In step S503, the similar target selection unit 11a selects a plurality of second similar local governments (which are corresponding to a plurality of reference targets in claim 1) that are local governments similar to City A, in which the measure has been introduced. For each second similar local government, a direction in which the number of the industrial workers increases or decreases, when the explanatory variables whose target variable is the number of industrial workers in the second similar local government change, is the same as a direction in which the number of the industrial workers increases or decreases, when the explanatory variables of the number of industrial workers in City A change. The explanatory variables are affected and changed over time by applying the measure to the second similar local governments. The explanatory variables of the number of industrial workers in the second similar local governments are usually the same as the explanatory variables of the number of industrial workers in the first similar local governments.

The similar target selection unit 11a selects local governments in which the measure to construct an industrial park has been introduced, from a plurality of local governments classified into the same classification name as City A, by referring to the similar group classification table 12b and a table in which the relationship between each local government and the introduction of the measure is recorded, stored in the memory 12. The similar target selection unit 11a selects all of the selected local governments or a predetermined number of the selected local governments as the plurality of the second similar local governments (e.g., City B to City F). When the similar target selection unit 11a selects a predetermined number of local governments, for example, the similar target selection unit 11a may select local governments whose population is within a predetermined range based on the population of City A. Alternatively, when the similar target selection unit 11a selects a predetermined number of local governments, the similar target selection unit 11a may select local governments whose percentages of a primary industry, a secondary industry, and a tertiary industry are within a predetermined range based on the percentages of City A.

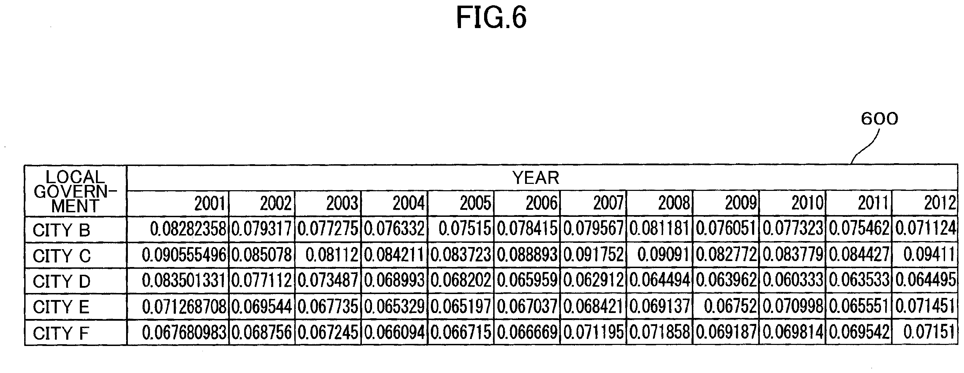

Fig. 6 is a drawing illustrating a table 600 indicating transition of the actual number of manufacturing workers in the respective second similar local governments (e.g., City B to City F) where the measure is introduced.

The table 600 indicates a relationship between the actual number of manufacturing workers in a city of the cities from City B to City F that are the second similar local governments in which the measure is introduced and the year, for each city and each year. The relationship between the actual number of manufacturing workers in a city of the cities from City B to City F and the year for each city and each year indicated in the table 600 is registered in the local government data 12c stored in the memory 12. The table 600 indicates the ratio of the number of manufacturing workers per one million inhabitants. For example, the value of 0.08282358 for City B in 2001 indicates 82823.58 people. For City B to City F, the measure was introduced in 2009. The table 600 indicates the relationship between the actual number of manufacturing workers and the year from 2001 to 2012, which ranges from before the measure introduction to after the measure introduction.

The number of the second similar local governments may be appropriately determined in accordance with accuracy required for the number of estimated manufacturing workers calculated in the next step. It is considered that the more similar in a population and an industrial structure the local governments are selected based on the similar group classification, the more accurate the estimated number of industrial workers is. In contrast, the more similar in a population and an industrial structure the local governments are selected, the less local governments are selected, and accuracy of the estimated number of industrial workers calculated by regression analysis or the like tends to be decreased.

In step S505, the estimated index value calculation unit 11b of the processor 11 calculates, for each second similar local government, an estimated number of manufacturing workers that is the number of manufacturing workers estimated under a virtual scenario in which the measure is not applied to the second similar local government. Specifically, for each second similar local government (e.g., City B to City F), the estimated index value calculation unit 11b obtains explanatory variables whose objective variable is the number of manufacturing workers in the second similar local government. The estimated index value calculation unit 11b calculates, for each second similar local government, the estimated number of manufacturing workers in the second similar local government based on a relationship between the estimated number of manufacturing workers and the explanatory variables of the second similar local government, and the explanatory variables of the second similar local government.

A process in which the estimated index value calculation unit 11b selects the explanatory variables whose objective variable is the number of manufacturing workers will be described. Subsequently, a process in which the estimated index value calculation unit 11b calculates the estimated number of manufacturing workers in the second similar local governments will be described.

The estimated index value calculation unit 11b reads first time-series data indicating the number of manufacturing workers in a plurality of local governments including City A per year, from the local government data 12c stored in the memory 12. The estimated index value calculation unit 11b reads second time-series data indicating a plurality of indexes that have a causal relationship with the number of manufacturing workers in the local governments including City A per year from the local government data 12c stored in the memory 12, except the number of manufacturing workers. The indexes that have a causal relationship with the number of manufacturing workers except the number of manufacturing workers may be changed when the number of manufacturing workers is changed. The indexes include a population and the number of welfare facilities for the elderly, for example.

The first time-series data has a data structure in which column data including the numbers of manufacturing workers in the local governments including City A are arranged in the order of the year.

The second time-series data has a data structure in which column data including the indexes that have a causal relationship with the number of manufacturing workers in the local governments including City A except the number of manufacturing workers (e.g., a population and the number of welfare facilities for the elderly) are arranged in the order of the year. The first time-series data and the second time-series data may not include information of City A.

For each index of the second time-series data indicating the indexes per year except the number of manufacturing workers, the estimated index value calculation unit 11b calculates correlation coefficients between column data of the second time-series data and column data of the first time-series data at reference time. The reference time is one of the year included in the first time-series data and may be selected as suited. As a result, for each index of the second time-series data indicating the indexes per year except the number of manufacturing workers, the estimated index value calculation unit 11b calculates correlation coefficients to column data of the first time-series data at the reference time among the first time-series data indicating the indexes per year.

The method to obtain a correlation coefficient is not limited. The estimated index value calculation unit 11b calculates a correlation coefficient R by using expression (1) below.

$$R = \frac{\sum_{i=1}^{n}(x_i - x_a)(y_i - y_a)}{\sqrt{\sum_{i=1}^{n}(x_i - x_a)^2}\sqrt{\sum_{i=1}^{n}(y_i - y_a)^2}} \qquad (1)$$

Here, the variable n indicates the number of data included in each column data and is corresponding to the number of the local governments. The variable $x_i$ indicates a value of i-th data of the column data at reference time in the first time-series data. The variable $y_i$ indicates a value of i-th data of the column data at a given year in the second time-series data. The variable $x_a$ is an average value of the column data at reference time in the first time-series data. The variable $y_a$ is an average value of the column data at the given year in the second time-series data.

In correlation coefficients per year calculated for each index of the plurality of the indexes except the number of manufacturing workers, the estimated index value calculation unit 11b selects correlation coefficients that are more than correlation coefficients calculated for a reference year, as processing targets.

The estimated index value calculation unit 11b arranges correlation coefficients selected as the processing targets in the time-series order, and creates an approximate straight line.

For each of the indexes except the number of manufacturing workers, the estimated index value calculation unit 11b determines an index that has a strong causal relationship with the number of manufacturing workers when a slope of an approximate straight line of the index is positive by checking whether a slope of an approximate straight line of the index is positive or negative.

The estimated index value calculation unit 11b selects all the indexes that generate an approximate straight line whose slope is positive, or indexes that generate an approximate straight line whose slope is positive and more than a predetermined threshold, as the explanatory variables to the number of manufacturing workers, from the indexes except the number of manufacturing workers. A predetermined threshold may be an average value of positive values of the slopes of the indexes, for example.

Based on the process described above, the estimated index value calculation unit 11b selects the number of welfare facilities for the elderly, product shipment value, the number of deaths, and the number of elementary school students as the explanatory variables whose objective variable is the number of manufacturing workers.

The reason why the correlation between the number of manufacturing workers and each one of the number of welfare facilities for the elderly, the number of deaths, and the number of elementary school students is high is considered that when the number of manufacturing workers is increased, the number of family members of manufacturing workers is also increased, and the numbers of elderly persons and elementary school students are increased. As the members of family of manufacturing workers are increased, it is considered that the number of members of family of manufacturing workers who die is increased.

When the number of manufacturing workers is increased, the number of products manufactured by manufacturing workers is increased. Consequently, it is considered that product shipment value is also increased.

Variables that have a causal relationship with a value of an index can be used as explanatory variables, and the high degree of causal relationship with a value of an index is preferred. Thus, in this embodiment, explanatory variables are selected based on the idea described above.

For each of the second similar local governments (e.g., City B to City F), the estimated index value calculation unit 11b calculates the estimated number of manufacturing workers in the second similar local government based on a relationship between the estimated number of manufacturing workers and the explanatory variables of the second similar local government, and the explanatory variables of the second similar local government. The relationship between the estimated number of manufacturing workers and the explanatory variables of the second similar local governments is obtained based on the relationship between the number of manufacturing workers obtained based on the explanatory variables of the first similar local governments and the explanatory variables of the first similar local governments by using a propensity score method, a matching method or a difference in differences method, for example. The estimated index value calculation unit 11b may obtain a relationship between the number of manufacturing workers and the explanatory variables of the second similar local governments based on a relationship between the number of manufacturing workers obtained based on the explanatory variables of the first similar local governments and the explanatory variables of the first similar local governments by using publicly known counterfactual thinking.

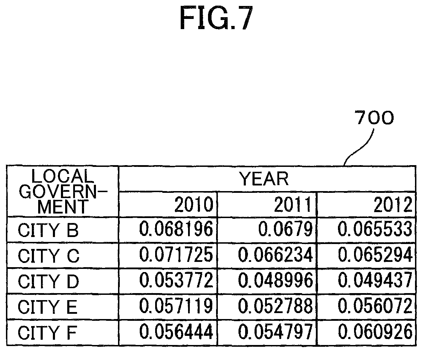

Fig. 7 is a drawing illustrating a table 700 indicating transition of an estimated number of manufacturing workers in respective second similar local governments under a virtual scenario in which the measure is not introduced.

The table 700 indicates a relationship between the number of manufacturing workers in City B to City F, which are the second similar local governments observed under a virtual scenario in which the measure is not introduced, and the year. As the measure is introduced in City B to City F in 2009, the table 700 indicates the number of manufacturing workers from the year of 2010, which is the next year from when the measure was introduced.

In step S507, for each of the second similar local governments (e.g., City B to City F), the first index value difference calculation unit 11c of the processor 11 calculates a difference of the number of manufacturing workers and the estimated number of manufacturing workers in the second similar local government as a difference of the number of manufacturing workers when the measure is introduced in the second similar local government.

Thus, the first index value difference calculation unit 11c calculates differences between the actual number of manufacturing workers in City B to City F from the year 2010 to 2012 (Fig. 6) and the estimated number of manufacturing workers in City B to City F (Fig. 7), respectively.

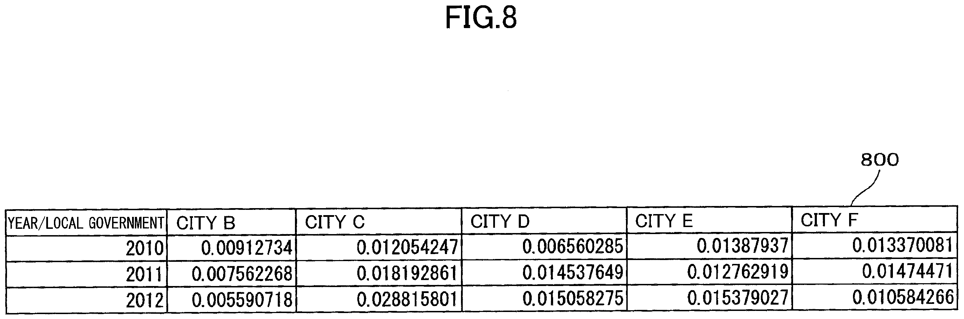

Fig. 8 is a drawing illustrating a table 800 indicating variations in the numbers of manufacturing workers in respective second similar local governments caused by introducing the measure.

Variations in the numbers of manufacturing workers in the respective second similar local governments (City B to City F) indicate effects on the corresponding one of the second similar local governments caused by introducing the measure. As illustrated in the table 800, the number of manufacturing workers in the year in each of the cities from City B to City F for each year indicates a positive value, and the number of manufacturing workers is increased by introducing the measure.

In step S509, the relation calculation unit 11d of the processor 11 calculates a relation expression that links variations in the numbers of manufacturing workers and the explanatory variables based on variations in the number of manufacturing workers and the explanatory variables of the respective second similar local governments (City B to City F). The relation calculation unit 11d uses the number of welfare facilities for the elderly, the product shipment value, the number of deaths, and the number of elementary school students determined in step S505 as the explanatory variables.

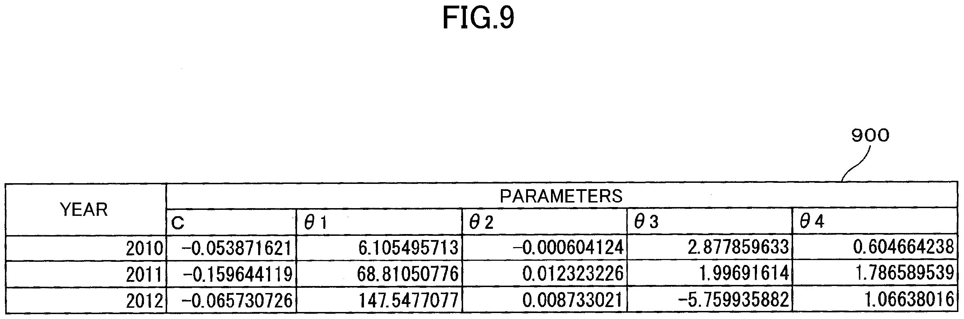

The relation calculation unit 11d reads time-series data of the number of welfare facilities for the elderly, the product shipment value, the number of deaths, and the number of elementary school students in each of the cities from City B to City F for each year from the local government data 12c stored in the memory 12. The relation calculation unit 11d conducts a regression analysis based on the time-series data of the variations in the number of manufacturing workers in each of City B to City F for each year illustrated in Fig. 8, and the time-series data of the explanatory variables of each city of City B to City F read from the memory 12. In this specification, the relation calculation unit 11d conducts the regression analysis of a linear model indicated by the following expression (2), and obtains the parameters illustrated in Fig. 9.

$$\alpha t = \theta 1 t X t + \theta 2 t Y t + \theta 3 t Z t + \theta 4 t W t + C t \quad (2)$$

Here, $\alpha t$ is a variation in the number of manufacturing workers at the year of t, Xt is the number of welfare facilities for the elderly at the year of t, Yt is product shipment value at the year of t, Zt is the number of deaths at the year of t, and Wt is the number of elementary school students at the year of t. $\theta 1 t$ is a coefficient of Xt, $\theta 2 t$ is a coefficient of Yt, $\theta 3 t$ is a coefficient of Zt and $\theta 4 t$ is a coefficient of Wt. Ct is a coefficient for each year. Fig. 9 is a drawing illustrating a table 900 that indicates concrete values of the parameters $\theta 1 t$, $\theta 2 t$, $\theta 3 t$, $\theta 4 t$, and Ct.

In step S511, the second index value difference calculation unit 11e of the processor 11 calculates the variations in the number of manufacturing workers under a virtual scenario in which the measure is applied to City A by using the explanatory variables of City A and the relationship of the expression (2) described above. The second index value difference calculation unit 11e calculates a sum of the variation in the number of manufacturing workers and the number of manufacturing workers in City A when the measure is not applied as the number of manufacturing workers obtained under a virtual scenario in which the measure is applied to City A.

When the second index value difference calculation unit 11e calculates the variations in the numbers of manufacturing workers in City A in the past, the second index value difference calculation unit 11e reads the explanatory variables of City A in the past for each year from the local government data 12c stored in the memory 12, and applies the explanatory variables to the expression (2) above.

When the second index value difference calculation unit 11e calculates variations in the number of manufacturing workers over time in the future, the second index value difference calculation unit 11e estimates the explanatory variables of City A in the future when the measure is not introduced. The second index value difference calculation unit 11e calculates the explanatory variables of City A from the past to the present when the measure is not introduced by using an existing method of counterfactual thinking, and can estimate the future explanatory variables of City A based on the explanatory variables of City A from the past to the present. The second index value difference calculation unit 11e calculates future variations in the number of manufacturing workers obtained under a virtual scenario in which the measure is applied to City A, by using the future explanatory variables of City A and the relationship of the expression (2) above.

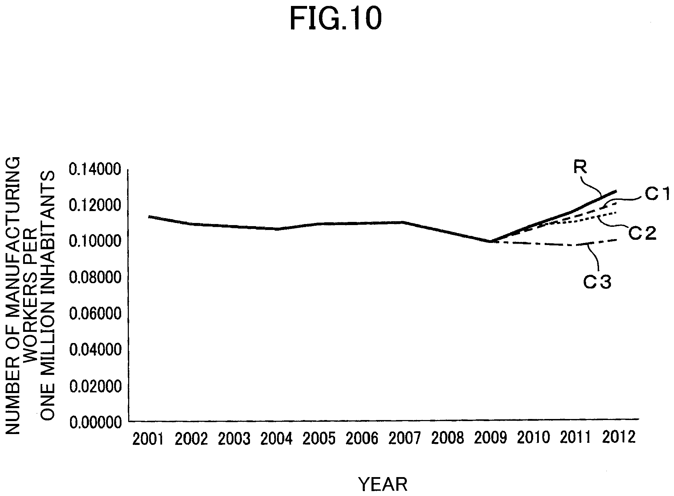

Fig. 10 is a drawing illustrating the number of manufacturing workers in City A under a virtual scenario in which a measure is introduced in City A.

A curve C1 indicates the number of manufacturing workers in City A obtained under a virtual scenario in which the measure has been introduced in City A from 2001 to 2012. A curve R indicating the actual number of manufacturing workers in City A from 2001 to 2012 in the past, is illustrated in comparison with the curve C1 generated by the apparatus 10.

Actually, the measure to construct an industrial park has been introduced in City A since 2009, and the curve R is generated based on the actual number of manufacturing workers in City A. The measure has been actually introduced in City A since 2009, however the curve C1 is generated by using a virtual scenario in which the measure is introduced in City A, and the curve C1 indicates the number of manufacturing workers in City A obtained under a virtual scenario in which the measure is applied to City A.

In Fig. 10, the curve C2 is created based on an average value of the variations in the numbers of manufacturing workers by introducing the measure in City B to City F. By using an existing method of counterfactual thinking, the curve C3 is created by obtaining the number of manufacturing workers in virtual City A under a virtual scenario in which the measure is not introduced in City A.

The curve C1 indicates values closer to the curve R than the curve C2, and calculates changes over time in the number of manufacturing workers of City A more accurately.

Fig. 10 indicates changes over time in the number of manufacturing workers of City A in the past, and the apparatus 10 can also calculate the number of manufacturing workers in City A in the future. The apparatus 10 calculates the number of manufacturing workers in City A in the future by substituting the future explanatory variables of City A when the measure is not introduced in City A into the expression (2) above. The future explanatory variables may be calculated by the apparatus 10, or may be given by a user.

According to the apparatus of this embodiment described above, effectiveness of the measure applied to a target to which the measure is not applied can be determined by obtaining a difference between a value of an index obtained under a virtual scenario in which the measure is introduced and a value of an index when a measure is not introduced in the target. Specifically, an effect of introducing a measure can be estimated by using future explanatory variables of a target.

In the present invention, the information processing method, the information processing apparatus, and the information processing computer program of this embodiment described above may be modified if necessary without departing from the spirit and scope of the invention.

For example, although the target is a local government in the embodiment described above, the target is not limited to a local government. For example, a patient treated in a medical institution or a company may be used as a target.

When a patient is used as a target, an index of a patient may include a value indicating a health condition of a patient such as a blood glucose value. Similar patients who are similar to a target patient may include patients who are the same age as a target patient or close in age to a target patient, or patients who are the same gender as a target patient.

When a company is used as a target, an index of a company may include values of sales, ordinary profit, and the like. Similar companies that are similar to a target company may include companies that are the same as or similar to a target company in employees, the amount of capital, or the type of industry.

In the embodiment described above, the apparatus 10 selects a plurality of the first similar local governments and the second local governments. Alternatively, the apparatus 10 may perform processes in step S505 and onward illustrated in Fig. 5 based on a plurality of the first similar local governments or the second local governments or both selected by a user.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiment(s) of the present inventions have been described in detail, it should be understood that the various changes, substitutions, and alterations could be made hereto without departing from the spirit and scope of the invention.

**Description of Reference Symbols**

10 information processing apparatus
11 processor
11a similar target selection unit
11b estimated index value calculation unit
11c first index value difference calculation unit
11d relation calculation unit
11e second index value difference calculation unit

12 memory
12a computer program
12b similar group classification table
12c local government data
12d recording medium
13 display device
14 input interface
15 communication interface

**Claims**

1. An information processing method, comprising:

   calculating, for each reference target among a plurality of reference targets to which a measure has been applied, a difference between a value of an index of a reference target being said each reference target linked to predetermined variables that change over time and that are influenced by the measure, and a value of the index of the reference target obtained under a virtual scenario in which the measure is not applied to the reference target, as a first index value difference occurring when the measure is applied to the reference target;
   calculating a relation expression that links the first index value difference to the predetermined variables based on the first index value difference and the predetermined variables of each reference target among the reference targets; and
   calculating, by using the predetermined variables of a target and the relation expression, a difference between a value of the index of the target obtained under a virtual scenario in which the measure is applied to the target and a value of the index of the target obtained when the measure is not applied to the target, as a second index value difference.

2. The information processing method as claimed in claim 1, wherein, for each reference target among the reference targets, a direction in which a value of the index of the reference target increases or decreases when the predetermined variables of the reference target change is the same as a direction in which a value of the index of the target increases or decreases when the predetermined variables of the target change.

3. The information processing method as claimed in claim 1 or 2, wherein calculating the relation expression includes calculating the relation expression by conducting a regression analysis with respect to the first index value difference and the predetermined variables of each reference target among the reference targets.

4. The information processing method as claimed in any one of claims 1 to 3, further comprising calculating a sum of the first index value difference and a value of the index of the target when the measure is not applied to the target.

5. The information processing method as claimed in any one of claims 1 to 4, wherein the target is a local government, and the target and the reference targets are similar in a population or an industrial structure.

6. The information processing method as claimed in any one of claims 1 to 4, wherein the target is a patient being treated, and the target and the reference targets are the same gender or of similar age.

7. The information processing method as claimed in any one of claims 1 to 4, wherein the target is a company, and the target and the reference targets are similar in the number of employees, an amount of capital or a type of industry.

8. An information processing apparatus comprising a processing unit including:

   a first index value difference calculation unit configured to calculate, for each reference target among a plurality of reference targets to which a measure has been applied, a difference between a value of an index of a reference target being said each reference target linked to predetermined variables that change over time and that are influenced by the measure, and a value of the index of the reference target obtained under a virtual scenario in which the measure is not applied to the reference target, as a first index value difference occurring when the measure is applied to the reference target;
   a relation calculation unit configured to calculate a relation expression that links the first index value difference to the predetermined variables based on the first index value difference and the predetermined variables of each reference target among the reference targets; and

a second index value difference calculation unit configured to calculate, by using the predetermined variables of a target and the relation expression, a difference between a value of the index of the target obtained under a virtual scenario in which the measure is applied to the target and a value of the index of the target obtained when the measure is not applied to the target, as a second index value difference.

9. An information processing computer program for causing a processor to execute a method comprising:

calculating, for each reference target among a plurality of reference targets to which a measure has been applied, a difference between a value of an index of a reference target being said each reference target linked to predetermined variables that change over time and that are influenced by the measure, and a value of the index of the reference target obtained under a virtual scenario in which the measure is not applied to the reference target, as a first index value difference occurring when the measure is applied to the reference target;

calculating a relation expression that links the first index value difference to the predetermined variables based on the first index value difference and the predetermined variables of each reference target among the reference targets; and

calculating, by using the predetermined variables of a target and the relation expression, a difference between a value of the index of the target obtained under a virtual scenario in which the measure is applied to the target and a value of the index of the target obtained when the measure is not applied to the target, as a second index value difference.

# FIG.1

# FIG.2

10

PROCESSOR — 11

12            12d

MEMORY

13

DISPLAY
DEVICE

14

INPUT INTERFACE

15

COMMUNICATION
INTERFACE

# FIG.3

(A)

PROCESSOR ~11

SIMILAR TARGET
SELECTION UNIT ~11a

ESTIMATED
INDEX VALUE
CALCULATION UNIT ~11b

FIRST INDEX VALUE
DIFFERENCE
CALCULATION UNIT ~11c

RELATION
CALCULATION
UNIT ~11d

SECOND INDEX VALUE
DIFFERENCE
CALCULATION UNIT ~11e

(B)

MEMORY ~12

COMPUTER PROGRAM ~12a

SIMILAR GROUP
CLASSIFICATION
TABLE ~12b

LOCAL
GOVERNMENT DATA ~12c

# FIG.4

# FIG.5

START

S501

SELECT A PLURALITY OF FIRST SIMILAR LOCAL GOVERNMENTS SIMILAR TO CITY A, WHERE MEASURE IS NOT INTRODUCED

S503

SELECT A PLURALITY OF SECOND SIMILAR LOCAL GOVERNMENTS SIMILAR TO CITY A, WHERE MEASURE HAS BEEN INTRODUCED

S505

CALCULATE ESTIMATED NUMBER OF MANUFACTURING WORKERS BY USING A VIRTUAL SCENARIO IN WHICH MEASURE IS NOT INTRODUCED FOR EACH SECOND SIMILAR LOCAL GOVERNMENT AMONG SECOND SIMILAR LOCAL GOVERNMENTS

S507

CALCULATE DIFFERENCE OF THE ESTIMATED NUMBER OF MANUFACTURING WORKERS BETWEEN SECOND SIMILAR LOCAL GOVERNMENT WHERE MEASURE IS INTRODUCED AND SECOND SIMILAR LOCAL GOVERNMENT WHERE MEASURE IS NOT INTRODUCED FOR EACH SECOND SIMILAR GOVERNMENT AMONG SECOND SIMILAR GOVERNMENTS, AND CALCULATE VARIATION IN THE NUMBER OF MANUFACTURING WORKERS CAUSED BY INTRODUCING MEASURE FOR EACH SECOND SIMILAR GOVERNMENT AMONG SECOND SIMILAR GOVERNMENTS

S509

CALCULATE RELATIONAL EXPRESSION BETWEEN VARIATION IN THE NUMBER OF MANUFACTURING WORKERS CAUSED BY INTRODUCING MEASURE IN EACH SECOND SIMILAR LOCAL GOVERNMENT OF SECOND SIMILAR LOCAL GOVERNMENTS AND EXPLANATORY VARIABLES

S511

CALCULATE VARIATION IN THE NUMBER OF MANUFACTURING WORKERS OBTAINED UNDER A VIRTUAL SCENARIO IN WHICH MEASURE IS INTRODUCED IN CITY A, AND CALCULATE SUM OF VARIATION IN THE NUMBER OF MANUFACTURING WORKERS AND THE NUMBER OF MANUFACTURING WORKERS WHEN MEASURE IS NOT INTRODUCED IN CITY A

END

## FIG.6

600

| LOCAL GOVERN-MENT | YEAR | | | | | | | | | | | |
|---|---|---|---|---|---|---|---|---|---|---|---|---|
| | 2001 | 2002 | 2003 | 2004 | 2005 | 2006 | 2007 | 2008 | 2009 | 2010 | 2011 | 2012 |
| CITY B | 0.08282358 | 0.079317 | 0.077275 | 0.076332 | 0.07515 | 0.078415 | 0.079567 | 0.081181 | 0.076051 | 0.077323 | 0.075462 | 0.071124 |
| CITY C | 0.090555496 | 0.085078 | 0.08112 | 0.084211 | 0.083723 | 0.088893 | 0.091752 | 0.09091 | 0.082772 | 0.083779 | 0.084427 | 0.09411 |
| CITY D | 0.083501331 | 0.077112 | 0.073487 | 0.068993 | 0.068202 | 0.065959 | 0.062912 | 0.064494 | 0.063962 | 0.060333 | 0.063533 | 0.064495 |
| CITY E | 0.071268708 | 0.069544 | 0.067735 | 0.065329 | 0.065197 | 0.067037 | 0.068421 | 0.069137 | 0.06752 | 0.070998 | 0.065551 | 0.071451 |
| CITY F | 0.067680983 | 0.068756 | 0.067245 | 0.066094 | 0.066715 | 0.066669 | 0.071195 | 0.071858 | 0.069187 | 0.069814 | 0.069542 | 0.07151 |

EP 3 637 359 A1

# FIG.7

700

| LOCAL GOVERN-MENT | YEAR | | |
|---|---|---|---|
| | 2010 | 2011 | 2012 |
| CITY B | 0.068196 | 0.0679 | 0.065533 |
| CITY C | 0.071725 | 0.066234 | 0.065294 |
| CITY D | 0.053772 | 0.048996 | 0.049437 |
| CITY E | 0.057119 | 0.052788 | 0.056072 |
| CITY F | 0.056444 | 0.054797 | 0.060926 |

## FIG.8

EP 3 637 359 A1

800

| YEAR/LOCAL GOVERNMENT | CITY B | CITY C | CITY D | CITY E | CITY F |
|---|---|---|---|---|---|
| 2010 | 0.00912734 | 0.012054247 | 0.006560285 | 0.01387937 | 0.013370081 |
| 2011 | 0.007562268 | 0.018192861 | 0.014537649 | 0.012762919 | 0.01474471 |
| 2012 | 0.005590718 | 0.028815801 | 0.015058275 | 0.015379027 | 0.010584266 |

# FIG.9

900

| YEAR | PARAMETERS | | | | |
|---|---|---|---|---|---|
| | C | $\theta 1$ | $\theta 2$ | $\theta 3$ | $\theta 4$ |
| 2010 | −0.053871621 | 6.105495713 | −0.000604124 | 2.877859633 | 0.604664238 |
| 2011 | −0.159644119 | 68.81050776 | 0.012323226 | 1.99691614 | 1.786589539 |
| 2012 | −0.065730726 | 147.5477077 | 0.008733021 | −5.759935882 | 1.06638016 |

# FIG.10

## INTERNATIONAL SEARCH REPORT

| International application No. |
| --- |
| PCT/JP2017/021386 |

A. CLASSIFICATION OF SUBJECT MATTER
*G06Q50/26*(2012.01)i, *G06F19/00*(2011.01)i

According to International Patent Classification (IPC) or to both national classification and IPC

B. FIELDS SEARCHED

Minimum documentation searched (classification system followed by classification symbols)
G06Q50/26, G06F19/00

Documentation searched other than minimum documentation to the extent that such documents are included in the fields searched
Jitsuyo Shinan Koho          1922–1996   Jitsuyo Shinan Toroku Koho   1996–2017
Kokai Jitsuyo Shinan Koho    1971–2017   Toroku Jitsuyo Shinan Koho   1994–2017

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 2014-081750 A (Hitachi, Ltd.), 08 May 2014 (08.05.2014), entire text; all drawings & US 2014/0108100 A1    & CN 103729776 A | 1–9 |
| A | WO 2017/037768 A1 (Hitachi, Ltd.), 09 March 2017 (09.03.2017), entire text; all drawings (Family: none) | 1–9 |
| A | WO 2015/193983 A1 (Hitachi, Ltd.), 23 December 2015 (23.12.2015), entire text; all drawings (Family: none) | 1–9 |

[X] Further documents are listed in the continuation of Box C.          [ ] See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 03 August 2017 (03.08.17) | 22 August 2017 (22.08.17) |

| Name and mailing address of the ISA/ Japan Patent Office 3-4-3,Kasumigaseki,Chiyoda-ku, Tokyo 100-8915,Japan | Authorized officer Telephone No. |
| --- | --- |

Form PCT/ISA/210 (second sheet) (January 2015)

**INTERNATIONAL SEARCH REPORT**

International application No.

PCT/JP2017/021386

| C (Continuation). DOCUMENTS CONSIDERED TO BE RELEVANT | | |
|---|---|---|
| Category* | Citation of document, with indication, where appropriate, of the relevant passages | Relevant to claim No. |
| A | JP 2003-167989 A (Hitachi, Ltd.),<br>13 June 2003 (13.06.2003),<br>entire text; all drawings<br>& US 2003/0105695 A1 & US 2003/0120580 A1 | 1-9 |
| A | JP 2010-079555 A (Promise Co., Ltd.),<br>08 April 2010 (08.04.2010),<br>entire text; all drawings<br>(Family: none) | 1-9 |
| A | Hideaki UCHIDA et al., "Agent no Riron to Sono<br>Oyo", IPSJ Journal, 27 November 2012 (27.11.<br>2012) (retrieval date), vol.53, no.11, pages<br>2409 to 2418 | 1-9 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007041705 A

- JP 2015132863 A